# EUROPÄISCHE PATENTSCHRIFT

(11) **EP 2 554 290 B1**
(45) Veröffentlichungstag und Bekanntmachung des Hinweises auf die Patenterteilung: **25.11.2015**
(21) Anmeldenummer: 12401162.8
(22) Anmeldetag: 23.07.2012
(51) Int. Cl.: B21D 39/03, B21D 35/00, B21K 25/00, B29C 65/44

(54) **Verfahren zur Verbindung eines Warmformteils mit einem weiteren Teil aus beliebigem Werkstoff**
Method for connecting a hot-formed part with a further part made from any material
Procédé de liaison d'une pièce formée à chaud avec une autre pièce de matière quelconque

(30) Priorität: 30.07.2011 DE 102011109010
(43) Veröffentlichungstag der Anmeldung: 06.02.2013
(73) Patentinhaber: GEDIA Gebrüder Dingerkus GmbH, 57439 Attendorn (DE)
(72) Erfinder: Buhr, Wolfgang, 57076 Siegen (DE)
(74) Vertreter: Köchling, Conrad-Joachim

(56) Entgegenhaltungen:
- EP-A2- 1 440 747
- WO-A1-99/07492
- DE-A1-102009 013 265
- FR-A1- 2 934 236
- US-A1- 2005 210 654

## Beschreibung

Die Erfindung betrifft ein Verfahren zur Verbindung eines gehärteten Warmformteils aus hochfestem Stahlblech mit mindestens einem weiteren Teil oder Flachteil aus beliebigem Werkstoff.

Im Stand der Technik ist es bekannt, insbesondere für Karosseriebestandteile von Kraftfahrzeugkarosserien gehärtete Warmformteile aus hochfestem Stahlblech einzusetzen, um bestimmte Verhalten von Karosseriestrukturen zu erreichen. Die Härtung solcher warmumgeformten Stahlteile kann partiell oder insgesamt erfolgen, je nach Anwendungsfall. Häufig ist es erwünscht, solche Stahlblechteile mit weiteren Teilen zu kombinieren, beispielsweise mit Teilen aus Kunststoff, glasfaserverstärktem Kunststoff, Aluminium, Karbon oder anderen bezüglich bestimmter Anwendungen vorteilhafter Materialien. Hierzu ist es im Stand der Technik üblich, solche zusätzlichen Teile mit dem Warmformteil aus hochfestem Stahlblech zu verschweißen oder zu verkleben. Bei manchen Belastungsfällen sind solche Verbindungen nicht erwünscht, weil Klebstoff ein zusätzliches Element ist, was bevorratet und verarbeitet werden muss und was bestimmte Qualitätsanforderungen erfüllen muss. Beim Verschweißen findet eine Materialbeeinflussung der miteinander zu verbindenden Werkstoffe statt, was ebenfalls in vielerlei Anwendungen unerwünscht ist.

Aus der US 2005/0210654 A1 ist es bekannt, Blechteile beliebiger Art allein durch Verstemmen miteinander zu verbinden.

Aus der WO99/07492 A1 ist es bekannt, ein Stahlblechteil auf Austenitisierungstemperatur zu erwärmen, das Blechformteil war umzuformen und zu härten. Dabei wird im Warmumformschritt auch ein Materialvorsprung gebildet, wobei das gesamte Teil anschließend gehärtet oder vergütet wird.

Ausgehend von diesem Stand der Technik liegt der Erfindung die Aufgabe zugrunde, ein Verfahren gattungsgemäßer Art zu schaffen, welches eine feste Verbindung von Bestandteilen miteinander ermöglicht, ohne dass Klebstoffe, Schweißmaterialien oder dergleichen eingesetzt werden müssen.

Zur Lösung dieser Aufgabe schlägt die Erfindung folgende Verfahrensschritte vor:
a) Erwärmen eines Blechteiles oder einer Platine aus hochfestem Stahlblech auf Austenitisierungstemperatur,
b) Warmumformen des Blechteils oder der Platine, wobei im Warmformschritt an mindestens einem als Verbindungsstelle vorgesehenen Bereich des Blechteils oder der Platine ein Materialvorsprung ausgebildet wird, der um mehr als die Materialstärke des weiteren Teiles oder Flachteiles über die vom Blechteil oder von der Platine gebildete Ebene vorragt,
c) Härten oder Vergüten des warmumgeformten Blechteils oder der warmumgeformten Platine,
d) Ausbilden einer Ausnehmung oder Lochung in einem Bereich des weiteren Teiles oder Flachteiles, mit dem das Teil oder Flachteil auf den Materialvorsprung des vergüteten Warmformteiles diesen übergreifend auflegbar ist,
e) Auflegen des Teiles oder Flachteils mit der Ausnehmung oder Lochung auf den Materialvorsprung, so dass dieser die Ausnehmung oder Lochung durchgreift und über die vom Teil oder Flachteil aufgespannte Materialebene vorragt,
f) Erwärmen des Materialvorsprunges auf eine zu dessen Umformung ausreichende Temperatur,
g) Verformung des über die Materialebene des Teils oder Flachteils vorragenden Bereiches des Materialvorsprunges, in der Weise, dass dessen Material über die von der Ausnehmung oder Lochung gebildete Randkante fließt und das Teil oder Flachteil gegen die Anlagefläche des vergüteten Warmformteils neben dem Materialvorsprung gepresst wird.

Durch die Erfindung wird ein Verfahren zur Verfügung gestellt, mittels dessen es in einfacher Weise möglich ist, gehärtete Warmformteile aus hochfestem Stahlblech mit beliebigen Flachteilen oder Teilen aus anderem Werkstoff zu verbinden.

Da Warmformteile aus hochfestem Stahlblech nicht mit einer üblichen Fügetechnik miteinander verbunden werden können, geht die Erfindung einen anderen Weg. Das Warmformteil wird zunächst im Wege der Warmumformung auf den Verbindungsvorgang vorbereitet. Dazu wird das Blechteil oder die Platine aus hochfestem Stahlblech auf Austenitisierungstemperatur erhitzt. Anschließend erfolgt die Warmumformung des Blechteils oder der Platine in einem entsprechenden Warmumformwerkzeug, wobei in diesem Warmumformschritt zusätzlich an dem Blechteil oder der Platine Materialvorsprünge ausgebildet werden, die in entsprechender Art und Weise geformt sind und eine entsprechende Höhe haben, so dass sie deutlich über die Ebene des Blechteils vorragen. Da diese Materialvorsprünge während des Warmumformschrittes eingebracht werden, ist deren Anordnung und Ausformung unproblematisch. Erst danach, wenn also die Warmumformung erfolgt ist und auch die Materialvorsprünge ausgebildet sind, erfolgt das Härten beziehungsweise Vergüten des warmumgeformten Blechteils oder der warmumgeformten Platine. Das Härten beziehungsweise Vergüten kann in dem Umformwerkzeug erfolgen, welches entsprechend gekühlt wird, oder aber es kann auch in einem anschließenden Verfahrensschritt erfolgen. Auch ist es möglich, das warmumgeformte Blechteil oder die warmumgeformte Platine nicht vollständig zu härten oder zu vergüten, sondern nur partiell.

Durch diese Ausgestaltung ist zunächst das Blechteil oder die Platine aus hochfestem Stahlblech zu einem entsprechenden gehärteten Warmformteil umgeformt. Um nun die Verbindung mit einem weiteren Teil oder Flachteil aus beliebigem Werkstoff zu ermöglichen, wird das weitere Teil oder Flachteil mit einer Ausnehmung oder Lochung versehen, die so groß bemessen und ausgebildet ist, dass das Teil oder Flachteil mit der Lochung oder Ausnehmung auf den Materialvorsprung des gehärteten Warmformteils aufgelegt werden kann und dieser Materialvorsprung die entsprechende Lochung oder Ausnehmung durchgreift. Die Höhe dieses Materialvorsprunges ist so bemessen, dass er mit einem durchaus wesentlichen Bestandteil über die vom Flachteil oder vom zusätzlichen Teil aufgespannte Ebene vorragt, wenn das Teil auf den Materialvorsprung des vergüteten Warmformteils aufgelegt ist.

Anschließend wird der Materialvorsprung verformt, wozu er zunächst erhitzt wird, und zwar auf eine zu dessen Umformung ausreichende Temperatur.

Wie schon eingangs ausgeführt, ist es nicht möglich, das vergütete Warmformteil zu fügen oder in anderer Weise eine Umformung vorzunehmen. Daher sieht die Erfindung vor, dass eine Erwärmung des Materialvorsprungs auf eine angemessene Temperatur erfolgt. Anschließend oder überlagernd mit der Erwärmung erfolgt dann eine Verformung des über die Materialebene des Teils oder Flachteils vorragenden Bereiches des Materialvorsprungs in einer solchen Weise, dass das von diesem verformte Material über die Randkante der Ausnehmung einer Lochung fließt und somit ein fester Verbund zwischen dem Flachteil oder dem Teil und der Auflagefläche des vergüteten Warmformteils neben dem Materialvorsprung erfolgt. Die Teile sind so in einfacher Weise miteinander verbindbar, ohne dass zusätzliche Materialien, wie Klebmittel, oder Schweißmittel eingesetzt werden müssen.

Bevorzugt ist dabei vorgesehen, dass der Materialvorsprung durch einen Durchzug gebildet wird, der einen Kragen bildet.

Gemäß dieser Ausgestaltung kann der Durchzug in Form einer offenen Hülse angeformt werden, die dann in geeigneter Weise die entsprechende Lochung oder Ausnehmung durchgreift und durch die angegebenen Maßnahmen umgeformt werden kann, um die Teile miteinander zu fügen.

Alternativ kann vorgesehen sein, dass der Materialvorsprung aus dem Blechteil oder der Platine zu einem napfartigen Teil umgeformt wird.

Hierbei wird vorzugsweise vorgesehen, dass der Materialvorsprung als topfartiges Element tiefgezogen wird.

Bei einer solchen Ausgestaltung weist das vergütete Warmformteil aus hochfestem Stahlblech keine Lochung auf, sondern ein topfartiges Element, welches umgeformt wird. Bei der Erhitzung und Umformung ist der Boden dieses topfartigen Elementes hilfreich, um ausreichend Material für die Umformung zur Verfügung zu stellen.

Auch kann vorgesehen sein, dass der Materialvorsprung als kegelstumpfartiges Element mit einer Delle im Stirnbereich des Stumpfes umgeformt wird.

Die Delle bei dieser Ausführungsform ist gegebenenfalls in der Weise hilfreich, als dass hierdurch ein zentrischer Ansatzpunkt für das Umformwerkzeug und Erwärmungswerkzeug gebildet ist, so dass die Erwärmung und Umformung präzise erfolgen kann.

Auch kann vorgesehen sein, dass die Erwärmung und Umformung des Materialvorsprungs durch Reibschweißen, Elektro- Schweißen, Kondensator-Entladungsschweißen oder durch ein Induktionsschweißmittel erfolgt.

Bevorzugt ist vorgesehen, dass die Umformung des Materialvorsprungs durch Aufbringen eines orthogonalen Drucks auf die Stirnseite oder den Stirnrand des Materialvorsprungs vorgenommen wird.

Auch kann bevorzugt sein, dass der Druckbewegung eine Drehbewegung überlagert wird, um die Umformung des Materialvorsprungs durchzuführen.

Sofern die Verformung des Vorsprunges mittels Reibschweißen erfolgen soll, ist die Bearbeitungsrichtung Drehung und orthogonale Druckausübung vorteilhaft. Sofern lediglich eine Verschweißung erfolgen soll, reicht eine orthogonale Bewegung zur Durchführung der Verbindung aus.

Ausführungsbeispiele der Erfindung sind in der Zeichnung dargestellt und im Folgenden näher beschrieben.

Es zeigt:

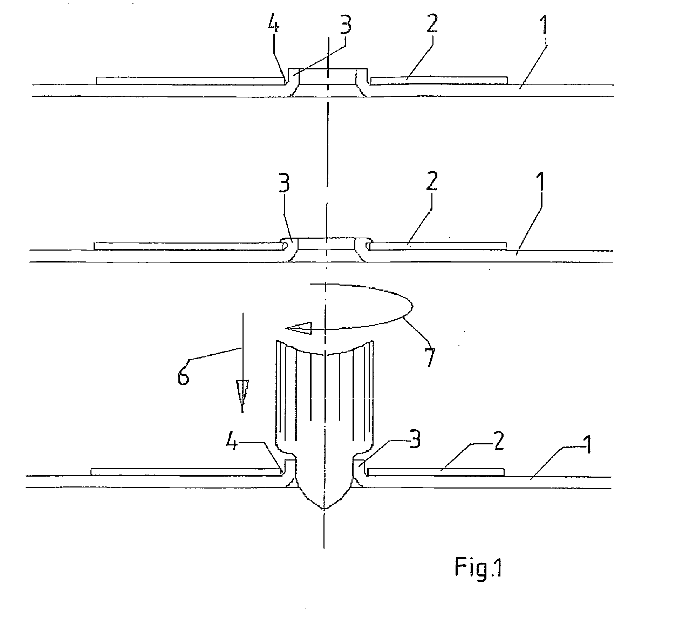

- Figur 1: ein erstes Ausführungsbeispiel, wobei in der Zeichnung oben die Ausgangssituation dargestellt ist und in der Mitte die Endsituation, während in der Zeichnung unten die Bewegung des Verbindungswerkzeuges zur Erzielung der Verbindung gezeigt ist.

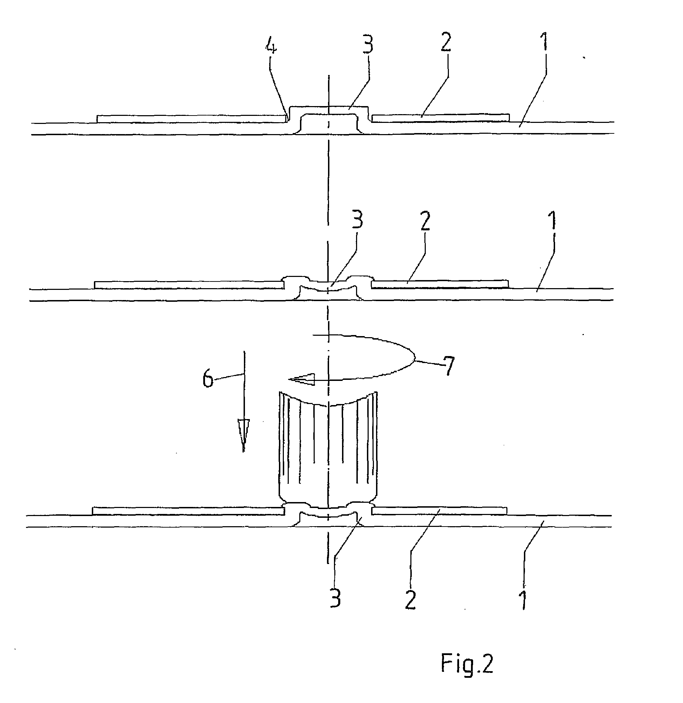

In gleicher Weise ist eine Alternative in Figur 2 dargestellt.

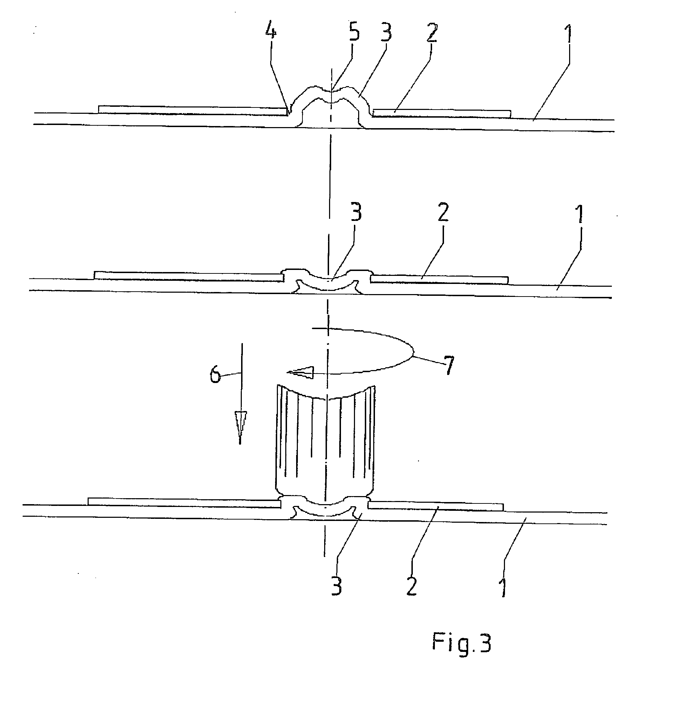

In Figur 3 ist eine weitere Alternative in gleicher Art und Weise gezeigt.

In jedem Falle ist anhand der Ausführungsbeispiele ein Verfahren zur Verbindung eines gehärteten Warmformteils 1 aus hochfestem Stahlblech mit einem weiteren Teil oder Flachteil 2 aus beliebigem Werkstoff erläutert. Gemäß diesem Verfahren wird zunächst ein Blechteil oder eine Platine aus hochfestem Stahlblech auf Austenitisierungstemperatur erhitzt und anschließend zu einem Warmformteil 1 umgeformt. Im Warmformschritt wird an mindestens einem als Verbindungsstelle vorgesehenen Bereich des Blechteils oder der Platine ein Materialvorsprung 3 ausgebildet, der um mehr als die Materialstärke des weiteren Teils oder Flachteils 2 über die vom Blechteil 1 oder von der Platine gebildete Ebene vorragt. Anschließend erfolgt eine Härtung oder Vergütung des warmumgeformten Blechteils 1. Eine weitere vorbereitende Maßnahme ist, dass das weitere Teil oder Flachteil 2 mit einer Ausnehmung oder Lochung 4 versehen wird. Mit dieser Lochung 4 wird das weitere Teil 2 auf den Materialvorsprung 3 aufgelegt, so dass der Materialvorsprung 3 noch auf der dem Teil 1 abgewandten Seite über die Ebene des weiteren Teils 2 vorragt. Anschließend wird der Materialvorsprung 3 auf eine zu dessen Umformung ausreichende Temperatur erhitzt und nachfolgend oder überlagernd erfolgt eine Verformung des über die Materialebene des Teils oder Flachteils 2 vorragenden Bereiches des Materialvorsprunges 3 in der Weise, dass dessen Material über die von der Ausnehmung 4 oder Lochung gebildete Randkante fließt und das Teil oder Flachteil 2 gegen die Anlagefläche des vergüteten Warmformteils 1 neben dem Materialvorsprung 3 gepresst wird. Die Endsituation ist in Figur 1 bis 3 in der mittigen Darstellung gezeigt.

Im Ausführungsbeispiel gemäß Figur 1 ist der Materialvorsprung 3 durch einen Durchzug gebildet, der einen Kragen bildet.

Im Ausführungsbeispiel nach Figur 2 und 3 ist der Materialvorsprung durch einen Umformvorgang gebildet, wobei bei der Ausführungsform nach Figur 2 der Materialvorsprung 3 ein topfartiges Element ist. Bei der Ausführungsform nach Figur 3 ist der Materialvorsprung 3 ein kegelstumpfartiges Element mit einer Delle 5 im Stirnbereich des Stumpfes.

In den Figuren ist jeweils in der untersten Darstellung gezeigt, wie die Umformung erfolgen kann. Die Umformung des Materialvorsprunges 3 erfolgt nämlich hier durch Aufbringung eines orthogonalen Drucks in Richtung des Bewegungspfeiles 6, kombiniert mit einer Drehbewegung gemäß Pfeil 7, die der Druckbewegung in Richtung des Bewegungspfeiles 6 überlagert ist.

## Patentansprüche

1. Verfahren zur Verbindung eines gehärteten Warmformteils (1) aus hochfestem Stahlblech mit mindestens einem weiteren Teil (2) oder Flachteil aus beliebigem Werkstoff, **gekennzeichnet durch** folgende Verfahrensschritte:
a) Erwärmen eines Blechteiles (1) oder einer Platine aus hochfestem Stahlblech auf Austenitisierungstemperatur,
b) Warmumformen des Blechteils (1) oder der Platine, wobei im Warmformschritt an mindestens einem als Verbindungsstelle vorgesehenen Bereich des Blechteils (1) oder der Platine ein Materialvorsprung (3) ausgebildet wird, der um mehr als die Materialstärke des weiteren Teiles oder Flachteiles (2) über die vom Blechteil (1) oder von der Platine gebildete Ebene vorragt,
c) Härten oder Vergüten des warmumgeformten Blechteils (1) oder der warmumgeformten Platine,
d) Ausbilden einer Ausnehmung (4) oder Lochung in einem Bereich des weiteren Teiles oder Flachteiles (2), mit dem das Teil oder Flachteil (2) auf den Materialvorsprung (3) des vergüteten Warmformteiles (1) diesen übergreifend auflegbar ist,
e) Auflegen des Teiles oder Flachteils (2) mit der Ausnehmung (4) oder Lochung auf den Materialvorsprung (3), so dass dieser die Ausnehmung (4) oder Lochung durchgreift und über die vom Teil oder Flachteil (2) aufgespannte Materialebene vorragt,
f) Erwärmen des Materialvorsprunges (3) auf eine zu dessen Umformung ausreichende Temperatur,
g) Verformung des über die Materialebene des Teils oder Flachteils (2) vorragenden Bereiches des Materialvorsprunges (3), in der Weise, dass dessen Material über die von der Ausnehmung (4) oder Lochung gebildete Randkante fließt und das Teil oder Flachteil (2) gegen die Anlagefläche des vergüteten Warmformteils (1) neben dem Materialvorsprung (3) gepresst wird.

2. Verfahren nach Anspruch 1, **dadurch gekennzeichnet, dass** der Materialvorsprung (3) durch einen Durchzug gebildet wird, der einen Kragen bildet.

3. Verfahren nach Anspruch 1, **dadurch gekennzeichnet, dass** der Materialvorsprung (3) aus dem Blechteil oder der Platine umgeformt wird.

4. Verfahren nach Anspruch 3, **dadurch gekennzeichnet, dass** der Materialvorsprung (3) als topfartiges Element umgeformt wird.

5. Verfahren nach Anspruch 3, **dadurch gekennzeichnet, dass** der Materialvorsprung (3) als kegelstumpfartiges Element mit einer Delle (5) im Stirnbereich des Stumpfes umgeformt wird.

6. Verfahren nach einem der Ansprüche 1 bis 5, **dadurch gekennzeichnet, dass** die Erwärmung und Umformung des Materialvorsprungs (3) durch Reibschweißen, Elektro- Schweißen, Kondensator- Entladungsschweißen oder durch ein Induktionspressmittel erfolgt.

7. Verfahren nach einem der Ansprüche 1 bis 6, **dadurch gekennzeichnet, dass** die Umformung des Materialvorsprungs (3) durch Aufbringen eines orthogonalen Drucks (6) auf die Stirnseite oder den Stirnrand des Materialvorsprungs (3) vorgenommen wird.

8. Verfahren nach Anspruch 7, **dadurch gekennzeichnet, dass** der Druckbewegung (6) eine Drehbewegung (7) überlagert wird, um die Umformung des Materialvorsprungs (3) durchzuführen.

## Claims

1. A method for connecting a hardened hot-formed part (1) made from high-strength steel sheet with at least one further part (2) or flat part made from any material, **characterized by** the following steps:
a) heating a sheet metal part (1) or a blank made from high-strength steel sheet to the austenitizing temperature,
b) hot-forming the sheet metal part (1) or the blank, in the hot-forming step a material projection (3) being formed at least at one region of the sheet metal part (1) or the blank intended as a connection position, the material projection (3) projecting by more than the material thickness of the further part or flat part (2) beyond the plane formed by the sheet metal part (1) or the blank,
c) hardening or annealing the hot-formed sheet metal part (1) or the hot-formed blank,
d) forming a recess (4) or perforation in a region of the further part or flat part (2), with which the part or flat part (2) can be placed onto the material projection (3) of the annealed hot-formed part (1) engaging over the latter,
e) placing the part or flat part (2) with the recess (4) or perforation onto the material projection (3), such that the latter penetrates the recess (4) or perforation and projects beyond the material plane formed by the part or flat part (2),
f) heating the material projection (3) to a temperature sufficient for forming it,
g) forming the region of the material projection (3) projecting beyond the material plane of the part or flat part (2), such that its material flows over the border edge formed by the recess (4) or perforation and the part or flat part (2) is pressed against the abutting surface of the annealed hot-formed part (1) beside the material projection (3).

2. The method according to claim 1, **characterized by that** the material projection (3) is formed by a rim hole forming a collar.

3. The method according to claim 1, **characterized by that** the material projection (3) is formed from the sheet metal part or the blank.

4. The method according to claim 3, **characterized by that** the material projection (3) is formed as a pot-like element.

5. The method according to claim 3, **characterized by that** the material projection (3) is formed as a frusto-conical element with a dimple (5) in the front region of the frustum.

6. The method according to one of claims 1 to 5, **characterized by that** heating and forming of the material projection (3) occurs by friction welding, electric welding, capacitor discharge welding, or by an induction pressing means.

7. The method according to one of claims 1 to 6, **characterized by that** forming of the material projection (3) is performed by applying an orthogonal pressure (6) onto the front side or the front edge of the material projection (3).

8. The method according to claim 7, **characterized by that** a rotational movement (7) is superimposed to the pressure movement (6), in order to carry out the formation of the material projection (3).

## Revendications

1. Procédé de liaison d'une pièce trempée formée à chaud (1) réalisée en tôle d'acier de haute résistance avec au moins une autre pièce (2) ou d'un plat de matière quelconque, **caractérisé par** les étapes suivantes:
a) chauffer une pièce en tôle (1) ou une platine réalisée en tôle d'acier de haute résistance à la température d'austénitisation,
b) former à chaud la pièce en tôle (1) ou la platine, dans l'étape de former à chaud un bossage de matière (3) étant formé au moins à une région de la pièce en tôle (1) ou de la platine destinée comme point de liaison, ce bossage de matière (3) faisant saillie par plus de l'épaisseur du matériau de l'autre pièce ou plat (2) au-delà du plan formé par la pièce en tôle (1) ou par la platine,
c) tremper ou traiter la pièce formée à chaud en tôle (1) ou la platine formée à chaud,
d) former un évidement (4) ou une perforation dans une région de l'autre pièce ou du plat (2), avec lequel la pièce ou le plat (2) peut être mis en place sur le bossage de matière (3) de la pièce formée à chaud (1) traitée en chevauchant celui-ci,
e) mettre en place la pièce ou le plat (2) avec l'évidement (4) ou la perforation sur le bossage de matière (3), de façon que celui-ci traverse l'évidement (4) ou la perforation et fasse saillie au-delà du plan de matière formé par la pièce ou le plat (2),
f) chauffer le bossage de matière (3) à une température suffisante pour le former,
g) former la région du bossage de matière (3) faisant saillie au-delà du plan de matière de la pièce ou du plat (2), de façon que sa matière s'écoule sur le bord formé par l'évidement (4) ou la perforation et la pièce ou le plat (2) soit poussée contre la surface d'appui de la pièce formée à chaud (1) traitée à côté du bossage de matière (3).

2. Procédé selon la revendication 1, **caractérisé en ce que** le bossage de matière (3) est formé par un soyage formant une collerette.

3. Procédé selon la revendication 1, **caractérisé en ce que** le bossage de matière (3) est formé à partir de la pièce en tôle ou de la platine.

4. Procédé selon la revendication 3, **caractérisé en ce que** le bossage de matière (3) est formé comme élément en forme de pot.

5. Procédé selon la revendication 3, **caractérisé en ce que** le bossage de matière (3) est formé comme élément tronconique avec une bosse (5) dans la région frontale du tronc.

6. Procédé selon une des revendications 1 à 5, **caractérisé en ce que** le chauffage et la formation du bossage de matière (3) a lieu par soudure à friction, soudure électrique, soudure par décharge de condensateur ou par un moyen de pressage par induction.

7. Procédé selon une des revendications 1 à 6, **caractérisé en ce que** la formation du bossage de matière (3) est réalisée par application d'une pression (6) orthogonale sur le front ou l'arête frontale du bossage de matière (3).

8. Procédé selon la revendication 7, **caractérisé en ce qu'**un mouvement rotatif (7) est superposé au mouvement de pression (6), afin de réaliser la formation du bossage de matière (3).
